# EUROPEAN PATENT APPLICATION

(11) **EP 4 841 487 A1**
(43) Date of publication of application: **18.11.2026**
(21) Application number: 25176564.0
(22) Date of filing: 15.05.2025
(51) Int. Cl.: G06F 21/32, G06F 21/55, H04L 9/40

(54) **A COMPUTERIZED PLATFORM FOR TRACKING THE ACTIVITY OF HUMAN OPERATORS IN DISTRIBUTED CONTROL SYSTEMS**

(71) Applicant: ABB Schweiz AG, 5400 Baden (CH)
(72) Inventor: MAZZA, Stefano, 16148 Genova (IT); VIVALDI, Federico, 16158 Genova (IT)
(74) Representative: De Bortoli, Eros

(57) **Abstract**

A computerized platform for a distributed control system comprising one or more computerised stations accessible by human operators and a computerized structure interacting with said computerized stations.

The computerized platform comprises one or more cameras, each arranged at a corresponding computerised station and configured to shoot a human operator at said computerised station.

The computerized platform comprises a first computerised module operatively associated with said cameras. The first computerised module is configured to acquire, from each camera, an image of a human operator who sent a command to said computerized structure through the computerised station, at which said camera is arranged. The first computerised module is further configured to provide an identification profile of said human operator based on said acquired image.

The computerized platform further comprises a second computerised module operatively associated with said first computerised module and with said computerized structure.

The second computerised module is configured to detect commands transmitted by the computerised station to the computerized structure. For each detected commands, the second computerised module is configured to generate log information associating the detected command with an identification profile acquired from the first computerised module and store said log information.

## Description

### Field of the invention

The present invention concerns the field of distributed control systems (DCS) for industrial applications. More specifically, the present invention relates to a computerized platform that allows tracking the activity of human operators at control stations of a DCS.

### Prior art

In industrial environments, ensuring the safety and accountability of the actions of human operators accessing the control stations is extremely important to ensure proper management of a distributed control system.

Currently, distributed control systems employ authentication mechanisms to allow human operators to access the control stations. However, it is quite common for a human operator to log-on to a control station at the beginning of a shift and remain logged-on even if he/she does not operate at said control station. In this case, all operating commands sent from that control station, after the first access, are recorded with the credentials of the logged-on person, even if other individuals send them.

As it is easy to understand, this circumstance can lead to gaps and problems in ascertaining responsibility in the management of a distributed control system, especially in high-pressure situations where many people can actively use the control station. In the event of an accident or troubleshooting, it may be quite difficult to trace the individual responsible for sending a certain critical command.

### Summary of the invention

The main purpose of the present invention is to provide a computerized platform for distributed control systems that allows overcoming or mitigating the above-described drawbacks of the state of the art.

Within this task, an object of the present invention is to provide a computerized platform allowing a human operator, who sent a certain command through a given control station, to be uniquely identified and tracked.

A further object of the present invention is to provide a computerized platform, which can be easily interfaced with the computerized resources of a distributed control system.

A further object of the present invention is to provide a computerized platform, which is relatively simple to implement in practice, at market-competitive costs.

This task and these objects, in addition to other objects that will be evident from the following description and the attached drawings, are achieved, according to the invention, by a computerized platform, according to claim 1 and the relative dependent claims proposed below.

In a general definition, the computerized platform, according to the invention, is adapted to track the activity of human operators in a DCS, which comprises one or more computerised stations accessible by human operators and a central computerized structure interacting with said computerized stations.

The computerized platform, according to the invention, comprises one or more cameras, each of which is arranged at a corresponding computerised station of the DCS. Each camera is configured to capture an image of a human operator present at the corresponding computerised station.

The computerized platform, according to the invention, comprises a first computerised module operatively associated with said cameras.

The first computerised module is configured to acquire, from each camera, an image of a human operator, who sent a command to said central computerized structure through the computerised station, at which said camera is arranged.

The first computerised module is configured to provide an identification profile of the shot human operator based on said acquired image.

Preferably, the first computerised module is configured to compare the acquired image with a collection of stored images of human operators. To this aim, the first computerised module preferably employs a machine learning tool or an artificial intelligence tool.

Preferably, the first computerised module is configured to retrieve a stored identification profile of a human operator, which corresponds to the acquire image, and provide the retrieved identification profile to a second computerised module of said computerised platform, if the acquired image matches with a stored image of said human operator.

Preferably, the first computerised module is configured to generate a temporary anonymous identification profile of a human operator, store the acquired image and said temporary anonymous identification profile in association and provide said temporary anonymous identification profile to a second computerised module of said computerised platform, if the acquired image does not match with any stored image of human operators.

The computerized platform, according to the invention, comprises a second computerised module operatively associated with said first computerised module and with said central computerized structure.

The second computerised module is configured to detect commands transmitted by said computerised stations to said central computerized structure.

For each detected command, the second computerised module is configured to acquire an identification profile from said first computerised module, which relates to a human operator who sent the detected command through a computerised station, generate log information associating the detected command with an identification profile acquired from said first computerized module and store said log information.

Preferably, the second computerised module is configured to activate said first computerised module and the camera arranged at the computerised station that transmitted the detected command, for each detected command.

Preferably, the computerized platform, according to the invention, comprises one or more computerised user-interface devices operatively associated to said first computerised module. Each user-interface computerised device is configured to allow a user to interact with said computerised platform.

Preferably, each user-interface device is configured to store new images and new identification profiles of human operators in order to update corresponding collections of stored images and stored identification profiles.

Preferably, each user-interface device is configured to modify stored images and stored identification profiles of human operators in order to update corresponding collections of stored images and stored identification profiles.

In further aspect, the present invention relates to a computer-implemented method for tracking the activity of a human operator in a distributed control system, according to claim 1 and the relative dependent claims proposed below.

The method, according to the invention, comprises the following steps:
- detecting a command transmitted by a computerised station of the DCS to a central computerized structure of the DCS;
- acquiring, from a camera arranged at said computerized station, an image of a human operator who sent the detected command through said computerised station;
- providing an identification profile of said human operator based on the acquired image;
- generating and storing log information associating the detected command and said identification profile.

Preferably, the method, according to the invention, comprises the step of activating the camera arranged at the computerised station that transmitted a detected command, upon detecting said command.

Preferably, the step of providing an identification profile comprises:
- comparing the acquired image with a collection of stored images of human operators;
- if the acquired image matches with a stored image of a human operator, retrieving a stored identification profile of said human operator and providing the retrieved identification profile to said second computerised module;
- if the acquired image does not match with any stored image of human operators, generating a temporary anonymous identification profile of a human operator, storing the acquired image and said temporary anonymous identification profile and providing said temporary anonymous identification profile to said second computerised module.

Preferably, the acquired image is compared with said collection of stored images of human operators through a machine learning tool or an artificial intelligence tool.

Further characteristics and advantages of the present invention will be more evident from the description provided below and the attached figures, provided for purely illustrative nonlimiting purposes, in which:
- figure 1 schematically illustrates the computerized platform, according to the invention;
- figure 2 schematically illustrates a method for tracking the activity of human operators in a distributed control system, which can be implemented by the computerized platform, according to the invention.

### Description of the invention

With reference to the cited figures, the present invention refers to a computerized platform 1 for tracking the activity of human operators in a distributed control system (DCS).

The DCS comprises one or more computerised stations 101 that are accessible by human operators and a computerized structure 102 interacting with said computerized stations.

For the sake of clarity, it is specified that, in the context of the present invention, the term *"human operator"* indicates any physical person intending to use a computerized station 101 to interact with the computerised structure 102, for example to receive information or send data and/or commands.

The computerised stations 101 are preferably client stations of the DCS while the computerised structure 102 is preferably the control system server of the DCS.

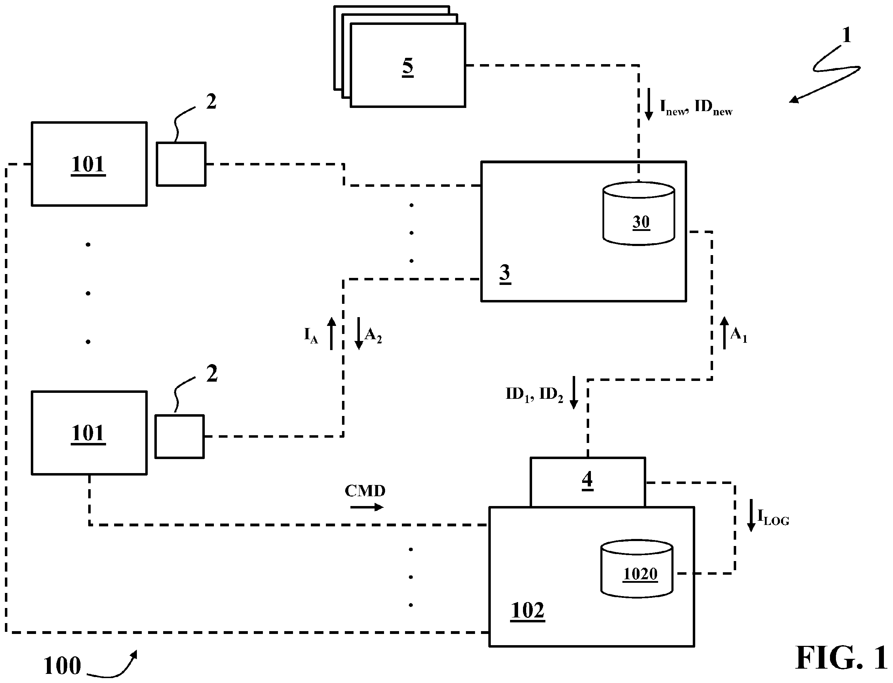

Preferably, the computerised structure 102 includes (as shown in figure 1) or is operatively associated with a first memory 1020, which may be, for example, a database of the DCS or a database of another computerised system made available to the DCS.

Each computerised station 101 can be accessed by a human operator through a log-on procedure implementing a suitable authentication mechanism, which may be of known type, for example of the biometric type.

Each computerised station 101 may physically consist of one or more computerized devices including suitable user-interface means, for example keyboards and screens, to allow a human operator to receive any information of interest and send data and/or commands.

The computerized structure 102 may comprise a plurality of computerized modules.

For the sake of clarity, it is specified that, in the context of the present invention, the term *"computerized module"* refers to a set of hardware and software resources (for example including one or more computerized devices executing suitable software programs and interacting with one another) designed to perform some functions of interest.

The computerised stations 101 and the computerized structure 102 can be remotely located one from another. For example, the computerised stations 101 can be located at level of the control room of an industrial plant while the computerised structure 102 can be arranged in protected site or also be implemented at cloud level.

The computerised stations 101 and the computerized structure 102 can communicate according to known communication methods, for example via the Internet or any dedicated digital communication network, for example a LAN. Commonly available communication protocols, for example a TCP/IP communication protocol, can be used to this purpose.

In general, the computerised stations 101 and the computerized structure 102 can be realized according to solutions of known type. Therefore, in the following, they will not be described in further detail, for the sake of brevity.

According to the invention, the computerised platform 1 comprises one or more cameras 2, each of which is arranged at a corresponding computerised station 101.

The cameras 2 can capture images I_{A} of human operators working at the corresponding computerised stations 101. Namely, in operation, each camera 2 can capture an image of a human operator as soon as this latter sends a commands CMD to the computerized structure 102 through the computerised station 101, at which said camera is arranged.

Preferably, each camera 2 is normally in a stand-by state and starts shooting the human operator physically present at the corresponding computerised station 101 upon receiving a suitable activation command A₂ from a certain computerised module 3 of the computerised platform.

In general, the cameras 2 of the computerised platform can be realized according to solutions of known type. For example, they can be commercially available digital cameras. Therefore, in the following, they will not be described in further detail, for the sake of brevity.

According to the invention, the computerised platform 1 comprises a first computerised module 3 operatively associated with the cameras 2.

The first computerised module 3 and the cameras 2 can communicate according to known communication methods, for example via the Internet or any dedicated digital communication network, for example a LAN.

Preferably, the first computerised module 3 includes (as shown in figure 1) or is operatively associated with a second memory 30, for example a database of the computerised platform or a database of another computerised system made available to the computerised platform.

Preferably, the first computerized module 3 is physically distinct from the computerised structure 102. In principle, however, the first computerized module 3 can even be physically integrated with the computerised structure 102.

According to the invention, in operation, the first computerised module 3 acquires images I_{A} of human operators provided by the cameras 2 and provides identification profiles ID₁ or ID₂ of the shot human operators.

Namely, the first computerised module 3 acquires from each camera 2 an image I_{A} of a human operator who sent a command CMD to the central computerized structure 102 through the corresponding computerised station 101, at which the camera is arranged, and it provides an identification profile ID₁ or ID₂ of said human operator based on the corresponding acquired image I_{A}.

Preferably, also the first computerised module 3 is normally in a stand-by state and starts operating upon receiving a suitable activation command A₁ from a further computerised module of the computerised platform.

Preferably, the first computerised module 3 carries out a facial recognition process, which exploits predefined information stored in the second memory 30 of the computerised platform, in order to provide an identification profile ID₁ or ID₂ of the shot human operator.

In the second memory 30 of the computerised platform, in fact, there are preferably stored a collection of images of human operators and a collection of identification profiles of human operators. The stored images relate to human operators, who can potentially access to the above-mentioned computerised stations 101, while each stored identification profile is associated to a corresponding stored image and includes information (e.g., name, birth date, authorization level, and the like) univocally identifying the human operator of the associated stored images.

As it will be better explained in the following, the stored collections of images and identification profiles can be updated routinely through a suitable web client computer.

Preferably, the first computerised module 3 compares an image I_{A} acquired from a camera 2 with the collection of images of human operators, which is stored in the second memory 30, and checks whether the acquired image I_{A} matches with an image already stored in the second memory 30.

To the above purpose, the first computerised module 3 preferably employs a machine learning or artificial intelligence tool, which can be implemented in practice according to solutions of known type. The use of these tools, which can be commercially available, allows increasing remarkably the speed and the efficiency of the facial recognition process.

If the acquired image I_{A} is determined to match with a stored image of a human operator, the first computerised module 3 retrieves a stored identification profile ID₁ of the shot human operator, which corresponds to the acquired image (and found stored image), and provides the retrieved identification profile ID₁ to a further computerised module 4 of the computerised platform.

If the acquired image I_{A} is determined not to match with any stored image of human operators, the first computerised module 3 generates a temporary anonymous identification profile ID₂ of a human operator, associates and stores the acquired image and the temporary anonymous identification profile ID₂ in the second memory 30, and provides the generated temporary anonymous identification profile ID₂ to a further computerised module 4 of the computerised platform.

It is evidenced how the first computerised module 3 always provides an identification profile ID₁ or ID₂ in response to acquiring the image I_{A} of a human operator from a camera 2, even when a known identification profile can be associated to said human operator.

This is quite important to track exhaustively the activity of human operators at the computerised stations 101. Even determining that an unknown human operator sent a certain command to the computerised structure 102 through a given computerised station 101 can provide useful information to ascertain any responsibility in the management of the DCS, whenever necessary.

According to the invention, the computerised platform 1 comprises a second computerised module 4 operatively associated with first computerised module 3 and the computerised structure 102.

Preferably, the second computerized module 4 is physically integrated with the computerised structure 102. In principle, however, the second computerized module 4 can be physically distinct from the computerised structure 102. Similarly, the second computerized module 4 can be physically integrated with or distinct from the first computerised module 3.

The second computerised module 4 can communicate with the first computerised module 3 and the computerised structure 102 according to known communication methods, for example via the Internet or any dedicated digital communication network, for example a LAN.

Preferably, the second computerised module 4 can interact with the first memory 1020 of the DCS, for example with the purpose of storing information therein.

According to the invention, the second computerised module 4 can detect commands CMD transmitted by any of the computerised stations 101 to the central computerized structure 102. The second computerised 4 can advantageously employ a suitable software detection tool (which may be of known type) to analyse the data packets incoming from the computerised stations 101 and directed to the computerised structure 102. In this way, the second computerised module 4 can determine whether a data packet is a command sent by a computerised station 101 and identify which computerised station 101 transmitted said command.

Preferably, upon detecting a certain command CMD, the second computerised module 4 activates the first computerised module 3 and the camera 2 arranged at the computerised station 101, which transmitted the detected command. As mentioned above, in fact, these components of the computerised platform are normally in a stand-by state.

According to the invention, for each detected command CMD, the second computerised module 4 acquires from the first computerized module 3 an identification profile ID₁ or ID₂. The acquired identification profile relates to the human operator who was physically present at the computerised station 101, when this latter transmitted the detected command CMD.

According to the invention, for each detected command CMD, the second computerised module 4 generates log information I_{LOG} that associates the detected commands CMD with the identification profiles ID₁ or ID₂ received from the first computerised module 3 and store the log information I_{LOG} so generated.

Namely, for each detected command CMD, the second computerised module generates log information I_{LOG}, which associates the detected command CMD to an identification profile ID₁ or ID₂ acquired from the first computerized module 3, and it stores the log information I_{LOG} in the first memory 1020 of the DCS.

The stored log information I_{LOG} allows univocally identifying the human operator (who may be temporarily anonymous) who sent the detected command CMD through a corresponding computerised station 101. Such a stored information can be conveniently checked whenever it is necessary to analyse the management activity of the DCS.

The operation of the computerised platform 1 is briefly summarized in the following.

It is supposed that a certain instant in time, a human operator sends a command CMD to the computerized structure 102 through a certain computerised station 101.

The second computerised module 4 detects the command CMD directed to the computerized structure 102 and transmits a first activation signal A₁ to activate the first computerised module 3. In response to receiving such an activation signal, the first computerised module 3 transmits a second activation signal A₂ to the camera 2 of interest.

In response to the activation by the second computerised module 4, the camera 2 provides an image I_{A} of the human operator, who is physically present at the computerised station 102, to the first computerised module 3.

On the other hand, in response to receiving the image I_{A} from the camera 2, the first computerised module 3 provides an identification profile ID₁ or ID₂ of the shot human operator. To this purpose, the first computerised module 3 can operate as explained above.

In response to receiving the above-mentioned identification profile, the second computerised module 4 generates log information I_{LOG}, which associates the detected command CMD to the acquired identification profile ID₁ or ID₂. The second computerised module 4 stored the generated log information I_{LOG} in the first memory 1020 of the DCS.

The computerised platform 1 advantageously repeats the above-mentioned operations for any detected command CMD incoming from any computerised station 101.

It is evidenced how the operation of the computerised platform 1 is silent with respect to the normal functionalities of the DCS. As an example, the computerised platform 1 does not interfere in any way with the log-on procedures or alarm procedures of the DCS.

Preferably, the computerised platform 5 comprises one or more user-interface computerised devices 5 operatively associated to the first computerised module 3 and allowing a user (for example an administrator) to interact with the computerised platform.

Each computerised device 5 is preferably a web-client of the computerised platform.

The computerised devices 5 and the first computerized module 3 can communicate according to known communication methods, for example via the Internet or any dedicated digital communication network, for example a LAN.

Advantageously, each computerised device 5 can interact with the second memory 30 of the computerised platform, for example with the purpose of storing information therein.

Preferably, each user-interface device 5 can store new images I_{new} and new identification profiles ID_{new} of human operators in the second memory 30. In this way, a user can update the collections of stored images and stored identification profiles with images and identification profiles of new human operators that are supposed to access to the computerised stations 101.

Preferably, each user-interface device 5 can modify stored images and stored identification profiles of human operators. In this way, a user can correct errors or inconsistencies or update the stored temporary anonymous identification profiles ID₂ once the related human operators have been fully identified.

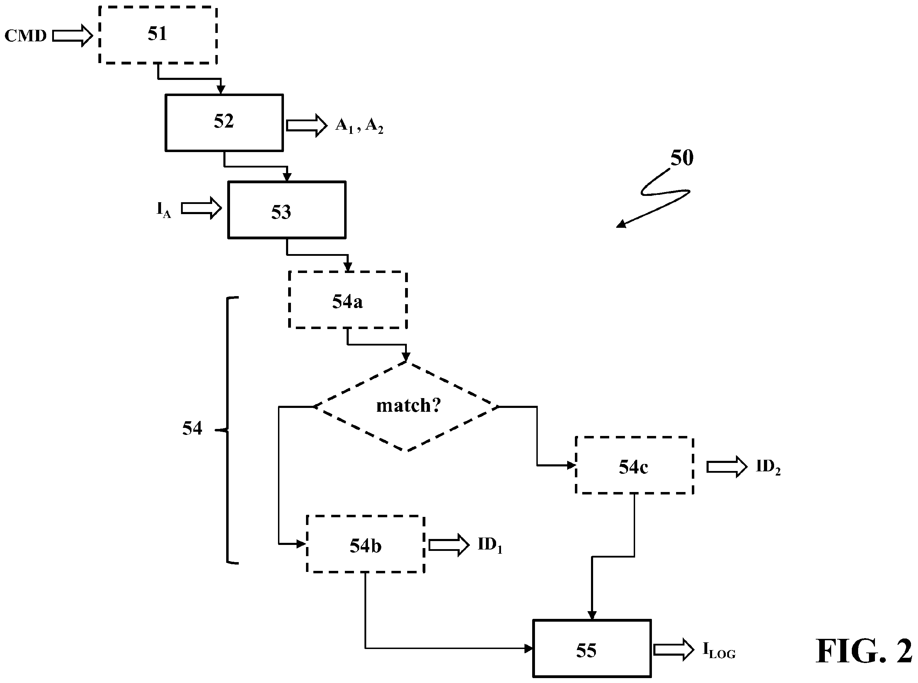

Referring now also to figure 2, in a further aspect, the present invention relates to a computer-implemented method 50 for tracking the activity of human operators in a DCS.

As explained above, the DCS comprises one or more computerised stations 101 accessible by human operators and a computerized structure 102 interacting with said computerized stations.

The method 50 comprises a step 51 of detecting a command CMD transmitted by a certain computerised station 101 to the central computerized structure 102.

The detection of a command CMD allows identifying the computerized station 101 that transmitted the detected command.

Upon detecting the command CMD, the method 50 preferably comprises a step 52 of activating a camera 2, which is arranged at the computerized station 101 that transmitted the detected command.

The method 50 then comprises a step 53 of acquiring from the camera 2, which is arranged at the computerized station 101 that transmitted the detected command, an image I_{A} of a human operator who is physically present at said computerised station and therefore sent the detected command through said computerised station.

The method 50 then comprises a step 54 of providing an identification profile ID₁ or ID₂ of the human operator shot by the camera 2 based on the acquired image I_{A}.

Preferably, the step 54 of providing an identification profile comprises a sub-step 54a of comparing the acquired image I_{A} with a collection of stored images of human operators.

Preferably, the comparison step 54a is carried out through a machine learning tool or an artificial intelligence tool.

If the acquired image I_{A} matches with a stored image of a human operator, the step 54 of providing an identification profile comprises a sub-step 54b of retrieving a stored identification profile ID₁ of said human operator (in practice the identification profiles that corresponds to the acquired image I_{A}) and providing the retrieved identification profile ID₁ for further processing.

If the acquired image I_{A} does not match with any stored image of human operators, the step 54 of providing an identification profile comprises a sub-step 54c of generating an anonymous identification profile ID₂ of a human operator, storing the acquired image I_{A} and the anonymous identification profile ID₂ in the second memory 30 and providing said anonymous identification profile for further processing.

The method 50 then comprises a step 55 of generating log information I_{LOG} associating the detected command CMD and the identification profile ID₁ or ID₂. The step 55 includes also storing the generated information I_{LOG} in the first memory 1020 of the DCS.

The method 50, according to the invention, as illustrated above, can be repeated for any detected command CMD incoming from any computerised station 101.

The above-mentioned method 50 can be advantageously implemented by a computerised platform, for example the computerised platform 1, as described above.

### Advantages of the invention

The computerised platform, according to invention, offer numerous advantages with respect to the solutions of the known art.

The computerized platform, according to the invention, allows tracking uniquely the activity of human operators sending commands to the control stations of the DCS. In this way, it is possible to collect and store log information, which allows reconstructing the activity of the human operators working in a control room of the DCS, whenever necessary.

The computerized platform, according to the invention, collects the above-mentioned log information in a transparent way in relation to the operation of the DCS, in particular with the log-on procedures and the alarms procedure of this latter.

In practice, the computerized platform operates as a sort of "black-box", which registers the commands transmitted by the computerised stations of the DCS and stores log information associating each detected command to an identification profile of a human operator, who actually sent the detected command by physically accessing to the computerised station (even if this person is not the logged-on user).

The computerized platform, according to the invention, can be easily interfaced and integrated with the computerized resources of a DCS. As it operates in support to the functionalities of the DCS without interfering with these latter, the computerized platform is particularly adapted to retrofiring interventions on existing DCS.

The computerized platform 1 can be implemented at practical level with hardware/software resources commonly used in the information technology field. It is therefore relatively simple to implement industrially, at market-competitive costs.

## Claims

1. Computerized platform (1) for a distributed control system, wherein said distributed control system comprises one or more computerised stations (101) accessible by human operators and a computerized structure (102) interacting with said computerized stations, **characterised in that** it comprises:
- one or more cameras (2), each arranged at a corresponding computerised station (101) and configured to capture an image of a human operator at said computerised station;
- a first computerised module (3) operatively associated with said cameras (2),
wherein said first computerised module is configured to acquire, from each camera (2), an image (I_{A}) of a human operator, who sent a command (CMD) to said computerized structure (102) through the computerised station (101), at which said camera is arranged;
wherein, said first computerised module is configured to provide an identification profile (ID₁, ID₂) of said human operator based on said acquired image (I_{A});
- a second computerised module (4) operatively associated with said first computerised module (3) and with said computerized structure (102),
wherein said second computerised module is configured to detect commands (CMD) transmitted by said computerised stations (101) to said computerized structure (102),
wherein, for each detected command (CMD), said second computerised module is configured to acquire an identification profile (ID₁, ID₂) of a human operator who sent the detected command from said first computerized module (3), generate log information (I_{LOG}) associating the detected command with the acquired identification profile and store said log information.

2. Computerised platform, according to claim 1, **characterised in that**, for each detected command (CMD), said second computerised module (4) is configured to activate said first computerised module (3) and the camera (2) arranged at the computerised station (101) that transmitted the detected command (CMD).

3. Computerised platform, according to one of the previous claims, **characterised in that** said first computerised module (3) is configured to:
- compare the acquired image (I_{A}) with a collection of stored images of human operators;
- if the acquired image (I_{A}) matches with a stored image of a human operator, retrieve a stored identification profile (ID₁) of said human operator, which corresponds to the acquired image, and provide said retrieved identification profile (ID₁) to said second computerised module (4);
- if the acquired image (I_{A}) does not match with any stored image of human operators, generate a temporary anonymous identification profile (ID₂) of a human operator, store the acquired image (I_{A}) and said temporary anonymous identification profile (ID₂) in association and provide said temporary anonymous identification profile (ID₂) to said second computerised module (4).

4. Computerised platform, according to claim 3, **characterised in that** said first computerised module (3) employs a machine learning tool or an artificial intelligence tool to compare an acquired image (I_{A}) with a collection of stored images of human operators.

5. Computerised platform, according to one of the previous claims, **characterised in that** it comprise one or more computerised user-interface devices (5) operatively associated to said first computerised module (3), each user-interface computerised device being configured to allow an administrator user to interact with said computerised platform.

6. Computerised platform, according to claim 5, **characterised in that** each user-interface device (5) is configured to store new images (I_{new}) and new identification profiles (ID_{new}) of human operators to update corresponding collections of stored images and stored identification profiles.

7. Computerised platform, according to claim 5 or 6, **characterised in that** each user-interface device (5) is configured to modify stored images and stored identification profiles of human operators to update corresponding collections of stored images and stored identification profiles.

8. A distributed control system (100) including a computerised platform (1), according to one or more of the previous claims.

9. A computer-implemented method (50) for tracking the activity of human operators in a distributed control system, wherein said distributed control system comprises one or more computerised stations (101) accessible by human operators and a computerized structure (102) interacting with said computerized stations, **characterised in that** it comprises:
- detecting (52) a command (CMD) transmitted by a computerised station (101) to said computerized structure (102);
- acquiring (53), from a camera (2) arranged at said computerized station (101), an image (I_{A}) of a human operator who sent the detected command (CMD) through said computerised station (101);
- providing (54) an identification profile (ID₁, ID₂) of said human operator based on the acquired image (I_{A});
- generating and storing (55) log information (I_{LOG}) associating the detected command (CMD) and said identification profile (ID₁, ID₂).

10. Method, according to claim 9, **characterised in that** it comprises activating (51) said camera (2) upon detecting said command (CMD).

11. Method, according to one of the claims from 9 to 10, **characterised in that** providing (54) an identification profile (ID₁, ID₂) comprises:
- comparing (54a) the acquired image (I_{A}) with a collection of stored images of human operators;
- if the acquired image (I_{A}) matches with a stored image of a human operator, retrieving (54b) a stored identification profile (ID₁) of said human operator, which corresponds to the acquired image, and providing the retrieved identification profile to said second computerised module (4);
- if the acquired image (I_{A}) does not match with any stored image of human operators, generating (54c) a temporary anonymous identification profile (ID₂) of a human operator, storing the acquired image (I_{A}) and said temporary anonymous identification profile (ID₂) and providing said temporary anonymous identification profile (ID₂) to said second computerised module (4).

12. Method, according to claim 11, **characterised in that** the acquired image (I_{A}) is compared with said collection of stored images of human operators through a machine learning tool or an artificial intelligence tool.
